# EUROPEAN PATENT SPECIFICATION

(11) **EP 1 121 794 B1**
(45) Date of publication and mention of the grant of the patent: **06.04.2005**
(21) Application number: 99970533.8
(22) Date of filing: 28.09.1999
(51) Int. Cl.: H04L 29/06

(54) **ACCESSING A SERVER COMPUTER**
ZUGRIFFSVERFAHREN AUF EINEN SERVER-COMPUTER
ACCES A L'ORDINATEUR D'UN SERVEUR

(30) Priority: 13.10.1998 GB 9822243
(43) Date of publication of application: 08.08.2001
(73) Proprietor: Nokia Corporation, 02150 Espoo (FI)
(72) Inventor: HANSEN, Hans, H., H., DK-1720 Copenhagen V (DK); HANSEN, Lars, DK-2100 Copenhagen 0 (DK); PUKKILA, Paivi, FIN-90460 Oulunsalo (FI)
(74) Representative: Read, Matthew Charles
(86) International application number: PCT/EP1999/007407
(87) International publication number: WO 2000/022794

(56) References cited:
- EP-A- 0 812 120
- GB-A- 2 341 759
- JP-A- 10 247 986

## Description

The present invention relates to a method of inputting settings to a client for accessing a server computer connected to a wireless telecommunication network, a system for inputting setting(s), a server computer, and a client.

Today, there are several ways of communicating by using a wireless communication terminal, e.g. by using a cellular phone. For example, it is possible to use a cellular phone to make voice calls, send short messages (SMS), access the Internet, etc. One example of such a terminal which is able to access the Internet is the Nokia 9000i Communicator™.

When using the Nokia 9000i Communicator™, in order to access e.g. the Internet, there are some setting(s) which should be fulfilled, before it will be possible to access the Internet. These setting(s) may for example be a provider name, a phone number, a user name and/or a password. Naturally, there may be more or even less setting(s) than those as mentioned, and some of the setting(s) are not always necessary to fulfil. The settings which should be fulfilled are mostly decided by an intemet provider, i.e. a provider of a server computer connected to the internet One reason for having these settings, is to have some kind of security level when a user is going to access the sever computer, in order to avoid unauthorised users. Also, the settings makes it more flexible for the user to access the server computer from other systems, than the Nokia 9000i Communicator™, like a personal computer having a software program for handling the connection between the user and the computer server.

The Nokia 9000i Communicator™ is very easy to use, when giving an input to the required settings, and the present invention provides a further development of inputting settings.

When the user gives the input manually, there might be a risk that some of the settings might be invalid. For example, when typing a password, the code may usually appear as asterisks, i.e. the user does not see what is being written on the screen. Therefore, in some cases there might be an uncertainty of whether the password is right or wrong. Also, there might be other occasions when a setting might be invalid, e.g. if the user gets confused and inputs an invalid setting without being aware of this.

Furthermore, due to the growing market of wireless communication, which presently reaches new customers and services all the time, there is a need to handle accounts to server computers in a more efficient way. For example, the Wireless Application Protocol (WAP) defines an industry-wide specification for developing applications that operate over wireless telecommunication networks. To enable operators and manufacturers to meet the challenges in advanced services, differentiation and fast/flexible service creation a set of protocols has been designed in transport, security, transaction, session and application layers. This means that it may be possible for a user to initiate a session to access e.g. the Intemet, by using a WAP platform. The initialising of the session can be done in a similar way as the Nokia 9000i Communicator™ provides, i.e. the user may input the settings.

US-A-5,751,798 disclose a passive information access system for use in a service subscription system having a service provider and a subscriber unit. The subscriber is typically a user of a cellular phone, who subscribes on a service provided by the service provider (e.g. an operator of a cellular telecommunications network). The passive information system incudes a database for storing subscriber information specific to a subscriber and a receiver for detecting initialising signals from a subscriber unit when the subscriber unit is active. The subscriber information is based on usage information, e.g. number of minutes used since last billing period. The passive information access system also includes a host computer for identifying the activated subscriber unit from the detected initialising signals, accessing from the database subscriber information specific to the identified subscriber unit, and presenting a portion of the accessed subscriber information to the identified subscriber unit.

EP-A-0812120 describes a system in which a service provider delivers a program to a user terminal. When the program is loaded, the terminal shows the user which services are available and the corresponding commands assigned to function keys.

US-A-5,577,103 propose a method of providing a subscriber in a cellular telephone network with information from a subscriber service profile. This document shows a further example of how it is possible to provide a subscriber with information based on a particular subscriber profite.

The present invention seeks to eliminate the risk of inputting incorrect setting(s), before accessing a server computer from a dient, which requires an input of setting(s). The client can be a wireless communication terminal, e.g. a Nokia 9000i Communicator™, a WAP terminal, or a similar terminal which have a possibility to access a server computer.

According to a first aspect of the present invention there is provided a method of inputting a setting or settings to a client for accessing a server computer, said server computer is connected to a telecommunication network, said server comprising initialising means giving the client access to said server, said initialising means comprising information about the setting or settings to be inputted to the client wherein the method comprises sending a request from said client to said network to establish a connection between the client and the network, said request comprises identification information identifying said client and said network, upon recognition of said identification information, sends a response to said request and establishes a connection between the client and the network, wherein said server, upon identification of the client, sends the information about the setting or settings to the client before the first time the client establishes a connection to the server in order to give an input of the setting or settings to the client which gives access to the server.

This can have the advantage that the user does not have to know anything about the settings, i.e. the user does not need any papers, or other material, which gives information about the settings and thus can facilitate the input of the setting or settings to a client, before accessing a server computer. It can also make it harder for an unauthorised user to access a user's account to a server computer, because there is no physical information about the account.

The client may send a response to the server upon receipt of said information about the setting or settings, to confirm the receipt of the information about the setting or settings. The server may send the information about the setting or settings repeatedly, over a fixed number of times, or until the client has sent a response back to the server confirming the receipt of the information about the setting or settings. The server may automatically detect said identification information sent to the network, when the client has sent the request to the network, and sends the information about the setting or settings to the client upon detection. The client may send a downloading request to the server for downloading the information about the setting or settings, and upon receipt of said downloading request, the server sends the information about the setting or settings back to the client as a response to said downloading request. The information about the setting or settings may be a short message (SMS). The client and said server may be using a Wireless Application Protocol (WAP), and the information about the setting or settings may be sent to the client by using a push command. The client may be provided with controller means, which automatically asks the client for an input of the information about the setting or settings, before the first time the client establishes a connection to the server.

According to a second aspect of the present invention there is provided a system for inputting a setting or settings, said system comprising: a client arranged to receive an input of a setting or settings, a server computer having initialising means giving the client access to said server, said initialising means comprising information about the setting or settings to be inputted in the client, and a cellular telecommunication network connected to said server, and arranged to establish a wireless connection between the client and the telecommunication network upon receiving a request from said client, said request comprising identification information identifying said client, said network comprising memory means which is arranged to identify the identification information from the client wherein said server is arranged to send the information about the setting or settings to the client, upon recognition of said identification information received in the request to the network before the first time the client is establishing a connection to the server, in order to give an input of the setting or settings to the client which gives access to the server.

The server and the client may be provided with a Wireless Application Protocol (WAP). The server may be further arranged to send information about the setting or settings to the client by using a push command, and/or a short message (SMS).

According to a third aspect of the invention there is provided a server computer provided with initialising means giving a client access to said server, said initialising means comprising information about the setting or settings to be inputted in the client, said server is arranged for connection to a cellular telecommunication network, said network is arranged to establish a connection between the client and the telecommunication network upon receiving a request from said client, said request comprising identification information identifying said client, said network comprising memory means which is arranged to identify the identification information in the request, wherein said server is further arranged to send said information about the setting or settings upon recognition of said identification information received in the request in the network, before the first time the client establishes a connection to the server in order to give the client an access to the server.

The server and the client may be provided with a Wireless Application Protocol (WAP). The server may be further arranged to send the information to the client by using a push command.

According to a fourth aspect of the present invention there is provided a client arranged to access a server computer, via a wireless telecommunication network, said client comprising controller means arranged to receive an input of initialising means giving the client access to said server, said initialising means comprising information about the setting or settings to be inputted in the client, wherein the controller means is further arranged to automatically ask for the information about the setting or settings from the server computer before the first time the client attempts to establish a connection to said server.

The client and the server may be provided with a Wireless Access Protocol (WAP). The client may be further arranged to receive the information about the setting or settings from the server through a push command.

According to a fifth aspect of the present invention there is provided a wireless communication terminal being a client.

The terminal may be a cellular phone.

Embodiments of the invention will be described in greater detail in the following by way of example only and with reference to the attached drawings, in which
Fig. 1 schematically illustrates a preferred embodiment of a hand portable phone/client according to the present invention,
Fig. 2 schematically shows the essential parts of a telephone for communicating with a cellular or cordless network,
Fig. 3 schematically shows a system for accessing a server computer according to the present invention,
Fig. 4 schematically shows how a client establishes a connection to a wireless telecommunication network,
Fig. 5 shows a flowchart of the input of settings to a client, for accessing a server computer, in accordance with the present invention,
Fig. 6 shows a further embodiment of the flowchart in Fig.5, in accordance with the present invention,
Fig. 7 illustrates the message structure for inputting settings to a client/phone for accessing a server computer according to the present invention, and
Fig. 8 shows an example of a user interface in a phone/client according to the present invention.

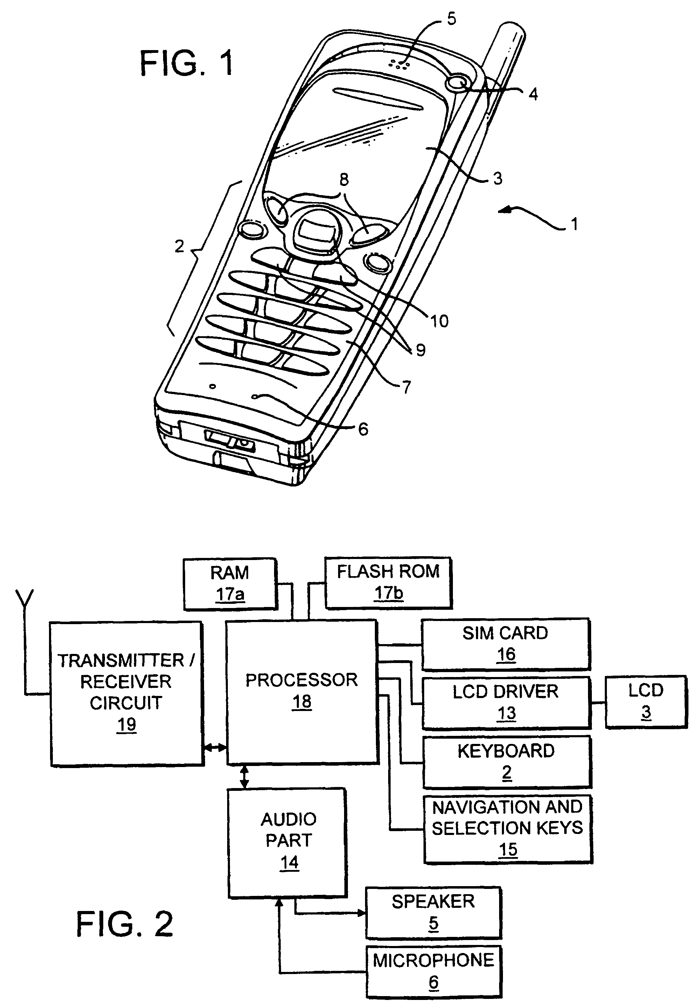

Fig. 1 shows a preferred embodiment of a client, hereafter also referred as a phone, according to the present invention. The phone, which is generally designated by 1, comprises a user interface having a keypad 2, a display 3, an on/off button 4, a speaker 5, and a microphone 6. The phone 1 according to the preferred embodiment is adapted for communication via a wireless telecommunication network, e.g. a cellular network. However, the phone could also have been designed for a cordless network. The keypad 2 has a first group 7 of keys as alphanumeric keys, by means of which the user can enter a telephone number, write a text message (SMS), write a name (associated with the phone number), etc. Each of the twelve alphanumeric keys 7 is provided with a figure "0-9" or a sign "#" or "*", respectively. In alpha mode each key is associated with a number of letters and special signs used in text editing.

The keypad 2 additionally comprises two soft keys 8, two call handling keys 9, and a navigation key 10.

The two soft keys 8 have a functionality corresponding to what is known from the phones Nokia 2110™, Nokia 8110™ and Nokia 3810™. The functionality of the soft key depends on the state of the phone and the navigation in the menu by using a navigation key. The present functionality of the soft keys 8 is shown in separate fields in the display 3 just above the keys 8.

The two call handling keys 9 according to the preferred embodiment are used for establishing a call or a conference call, terminating a call or rejecting an incoming call.

The navigation key 10 is an up/down key and is placed centrally on the front surface of the phone between the display 3 and the group of alphanumeric keys 7. Hereby the user will be able to control this key by simply pressing the up/down key using his/her thumb. Since many experienced phone users are used to one-hand control, it is a very good solution to place an input key, requiring precise motor movements. Thus, the user may place the phone in the hand between the finger tips and the palm of the hand. Hereby, the thumb is free for inputting information.

Fig. 2 schematically shows the most essential parts of a preferred embodiment of the phone. These parts being essential to understand the invention. The preferred embodiment of the phone of the invention is adapted for use in connection with a GSM network, but, of course, the invention may also be applied in connection with other phone networks, such as other kinds of cellular networks and various forms of cordless phone systems or in dual band phones accessing sets of these systems/networks. The microphone 6 records the user's speech, and the analogue signals formed thereby are A/D converted in an A/D converter (not shown) before the speech is encoded in an audio part 14. The encoded speech signal is transferred to controller means 18, which may support software in the phone. The controller means 18 also forms the interface to the peripheral units of the apparatus, including a RAM memory 17a and a Flash ROM memory 17b, a SIM card 16, the display 3 and the keypad 2 (as well as data, power supply, etc.). The controller means 18 communicates with the transmitter/receiver circuit 19. The audio part 14 speech-decodes the signal, which is transferred from the controller 18 to the earpiece 5 via a D/A converter (not shown).

The controller means 18 is connected to the user interface. Thus, it is the controller means 18 which monitors the activity in the phone and controls the display 3 in response thereto.

Therefore, it is the controller means 18 which detects the occurrence of a state change event and changes the state of the phone and thus the display text. A state change event may be caused by the user when he activates the keypad including the navigation key 10, and these type of events are called entry events or user events. However, the network communicating with the phone may also cause a state change event. This type of event and other events beyond the user's control are called non user events. Non user events comprise status change during call set-up, change in battery voltage, change in antenna conditions, message on reception of SMS, etc.

### Network.

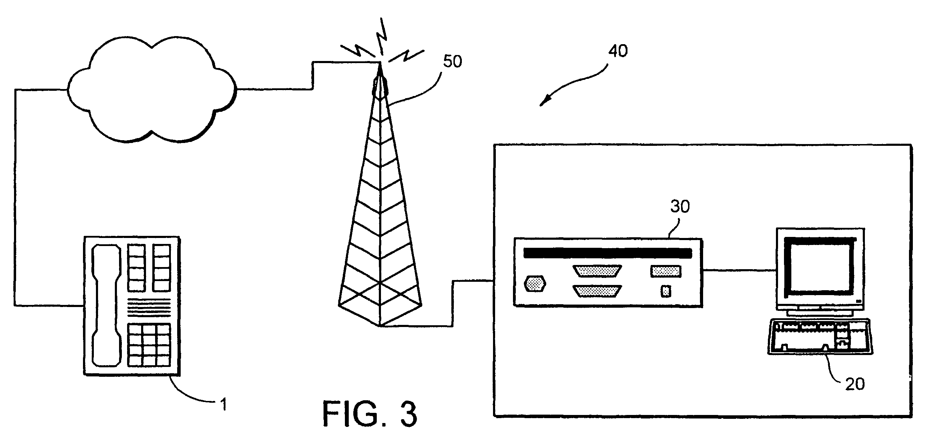

Fig. 3 schematically shows a system 40, comprising a network 50, a server computer 20 and a client 1. This example will show how a session, i.e. a connection, between a server computer 20 and a client 1, e.g. a wireless communication apparatus like a cellular phone, is established. The server 20 and the client 1 may support a Wireless Application Protocol (WAP). The WAP content and its applications are specified in a set of well-known content formats based on the familiar WWW content formats. WAP is disclosed in the Wireless Application Protocol Architecture Specification; Version 30-Apr-1998; by Wireless Application Protocol Architecture Working Group; (see also http://www.wapforum.org/docs/technical.htm/arch-30-apr-98.pdf on the Internet).

When transporting content between the client 1 and the server 20, the content is transported using a set of standard communication protocols based on the WWW communication protocols. A browser in the client 1 co-ordinates the user interface and is analogous to a standard web browser. The client 1 is provided in an environment, which makes it possible to reach a wide variety of different wireless platforms, e.g. world wide web (WWW). The environment provided may be referred to as Wireless Application Environment (WAE). This means that the client 1 may be supported by some kind of browser, e.g. a micro-browser, to access the different services connected to the server. In order to access these services the browser may comprise following functionalities:
· Wireless Markup Language (WML) - a lightweight markup language, similar to HTML, but optimised for use in hand-held mobile terminals;
· WML Script - a lightweight scripting language, similar to JavaScript™;
· Wireless Telephony Application (WTA, WTAI) - telephony services and programming interfaces; and
· Content Formats - a set of well-defined data formats, including images, phone book records and calendar information.

The server 20 supporting the Wireless Application Protocol, may be connected to a gateway 30. The gateway 30 is also a kind of server, which may identify and encrypt/decrypt information between the client 1 and the server computer 20. This means that the gateway can be provided with encoders and decoders (not shown). Also, the server 20 may comprise different algorithms to make the encryption/decryption. The encryption/decryption itself may be performed by well-known methods, e.g. RSA, Diffie-Hellman, etc. The server computer 20 may comprise different scripts to support WAP and data to be accessed by the client. This data may comprise all kinds of information, e.g. weather reports, news, information from stock markets, etc.

In order to access the server computer 20, from the client 1, the server 20 is connected to a wireless telecommunication network 50, e.g. a cellular phone network. The network 50 comprises memory means (not shown), which is arranged to identify the identification means from the client. The memory means can be e.g. a database, comprising information about different subscribers of the network. Thus, when a client tries to establish a connection to the network, the network controls if the client is stored in the memory means.

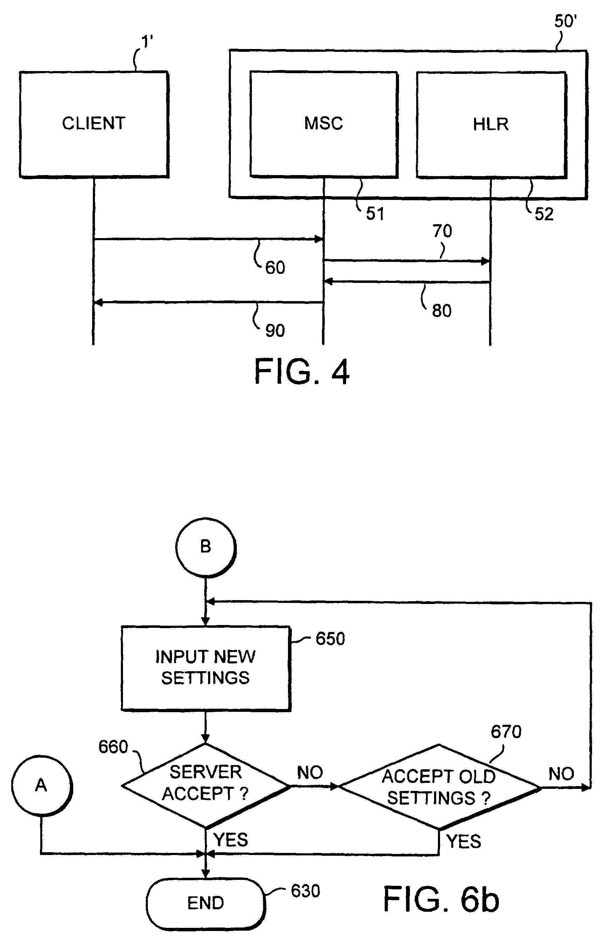

The connection between the client and the network is shown as an example in Fig. 4. The network 50' in Fig.4 can be provided with a Mobile Switching Centre (MSC) 51 and a Home Location Centre (HLR) 52, which are well known in the art. The HLR 52 may comprise a database (not shown) having information about different clients having access to the network 50'.

Upon activating the client, it is common to press in a code, e.g. by entering a PIN code, which can be connected to a SIM card. When the client 1', in Fig.4, is activated, i.e. the phone is turned on, the client 1' sends a request 60 to the MSC 51, which serves the client's operating area. The request 60 comprises identification means (not shown), identifying said client. The MSC 51 sends a message 70 to the associated HLR 52 to ascertain the status of the subscriber associated with the client. The HLR 52 notifies 80 the MSC 51 whether or not the subscriber (client) is an authorised user, and if authorised, the MSC 51 sends a response 90 to said request 60 and establishing a connection between the client 1' and the network 50'.

### The input of settings

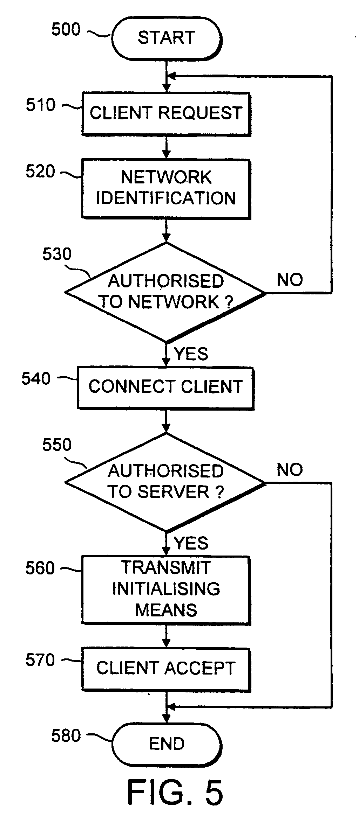

Fig. 5 shows a flow chart, in accordance with the present invention, describing the input of settings to a client before the first time the client is establishing a connection to a server. In order to activate the client, it must be turned on. It is common to press in a code, when the client is going to be activated, e.g. by entering a PIN code, which can be connected to a SIM card. Upon activating the client "START" 500, the client sends a request to the network "CLIENT REQUEST" 510. This request 510 can be handled by e.g. the controller 18, as disclosed in Fig. 2. The request comprising identification means (not shown), which identifies the client. The identification means can be information stored on the client's SIM card. This type of information is well known in the art, and will not be disclosed in any further detail. Then the network performs a similar identification of the client "NETWORK IDENTIFICATION" 520, as shown in Fig. 5. If the client is authorised to the network "AUTHORISED TO NETWORK?" 530, i.e. if the network recognises the identification means, a connection is established between the client and the network "CONNECT CLIENT" 540. Else, the client has to send another request in order to establish a connection to the network. The recognition can be done by comparing the identification means with a database, to control if the identification means is included in the database. How the actual comparison is done is well known in the art, and will not be disclosed any further.

When the client is connected to the network, the computer server controls whether the client is authorised to the server or not "AUTHORISED TO SERVER?" 550. This control can for example be done by forwarding the request from the client to the network. The server receives the identification means from the network or reads the identification means from the network. If the client does not have access to the server, i.e. the client is not authorised, the client may use the network as usual and make calls, but without having the possibility to access the server. How this is handled is decided by the provider of the network, so it may also be possible to refuse or grant the client to access the network. If the server recognises the identification means, received in the request to the network, the server sends initialising means to the client "TRANSMIT INITIALISING MEANS" 560. These initialising means comprises information about the settings the client must have to access the server computer. The transfer (sending) of the initialising can be done automatically, e.g. by allowing the server to automatically detect the identification means sent to the network, when the client has sent the request to the network, and sends the initialising means to the client upon reception. The transfer may also be done by sending a download request to the server, for downloading the initialising means. Upon receipt of the downloading request in the server, the server sends the initialising means back to the client, as a response to the downloading request.

When the client receives the initialising means, the client might input these settings either by accepting them automatically or manually "CLIENT ACCEPT" 570, e.g. by sending a response back to the server to confirm the accept. How the client inputs the settings is decided by the controller means 18, as mentioned earlier with reference to Fig. 2. After this stage a session has been established between the client and the server "END" 580, which means that data can be exchanged over a WAP session.

As a preferred embodiment, the format of the initialising means can be sent as a short message (SMS), and/or by using a push command. Thus, it may be possible to either send the initialising means as an SMS message by using the push command, or by sending another message by means of the push message. The push command is a feature used in the Wireless Application Protocol (WAP).

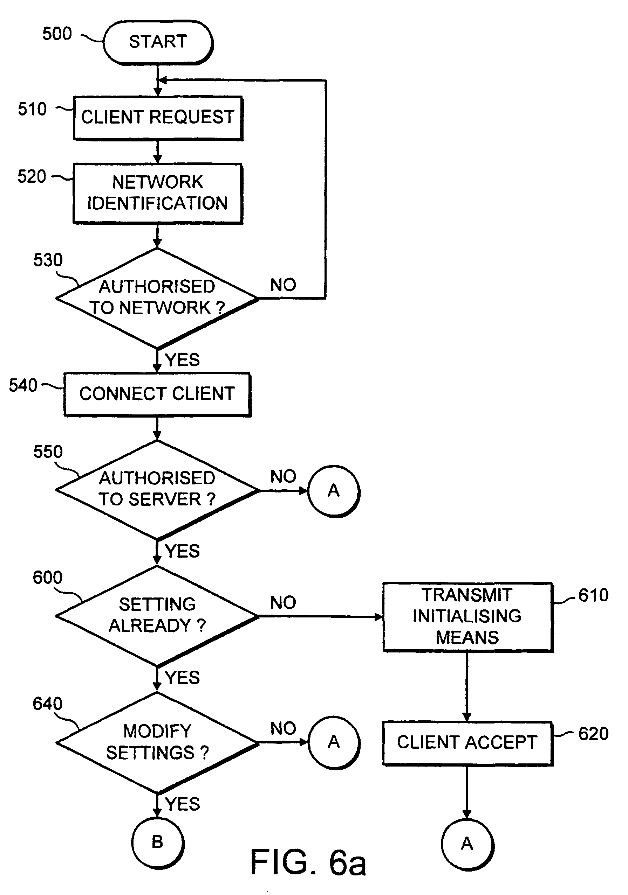

The example shown in Fig.6 is disclosing further features, according to the present invention. In Fig. 6a, the steps from "START" 500 to "AUTHORISED TO SERVER?" 550 is corresponding to the steps shown in Fig.5. Starting from the step "AUTHORISED TO SERVER?" 550, having a client who does not have access to the server, i.e. the client is not authorised, the session to the server computer will be ended, as described with reference to Fig. 5. Else, the computer server may ask the client if any initialising means has been received yet "SETTINGS ALREADY?" 600. If no initialising means has been received, the server computer sends initialising means to the client "TRANSMIT INITIALISING MEANS" 610. These initialising means comprises information about the settings the client must have to access the server computer. As disclosed with reference to Fig.5, the transfer (sending) of the initialising can be done automatically, and/or by sending a download request to the server, for downloading the initialising means. Upon receipt of the downloading request in the server, the server sends the initialising means back to the client, as a response to the downloading request. When the client receives the initialising means, the client might input these settings either by accepting them automatically or manually "CLIENT ACCEPT" 620, e.g. by sending a response back to the server to confirm the accept. How the client inputs the settings is decided by the controller means 18, as mentioned earlier with reference to Fig. 2.After the point marked with an "A", a session has been established between the client and the server "END" 630, which means that data can be exchanged over a WAP session. The "A" and "B" in Fig. 6a refers to "A" and "B" in Fig. 6b.

If the server has already sent initialising means to the client, the server may ask the client if any changes in the settings should be made "MODIFY SETTINGS?" 640. If the client does not want any changes, "A", a session can be established "END" 630. Else, the client may input new settings, "B", "INPUT NEW SETTINGS" 650, and if the server accepts the new settings "SERVER ACCEPT?" 660, a session can be established, "END" 630. If the server does not accept the new settings, e.g. because the new settings are not valid, the server may ask the client if he/she wishes to accept the old settings "ACCEPT OLD SETTINGS?" 670. If the client accepts the old settings a session can be established, "END" 630. Else, the client may try to make another input, i.e. go back to the step "INPUT NEW SETTINGS" 650.

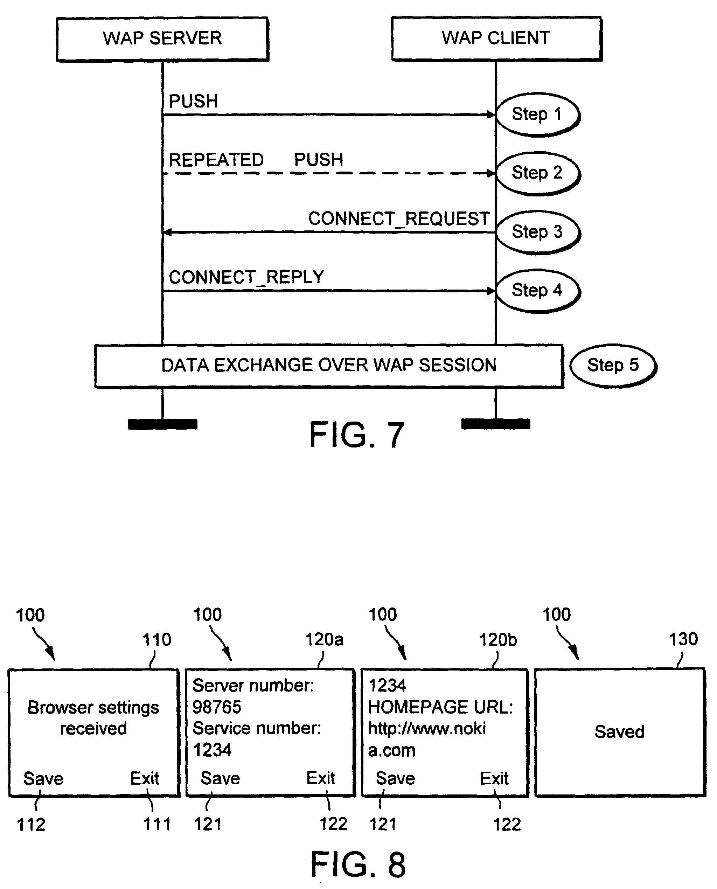

Fig. 7 shows an example of a preferred embodiment, in accordance with the present invention, of how it will be possible to use a push command to input settings to a client. In general, the method makes use of the push command in order to push the initialising means, i.e. the initial settings, to a client from a server computer. The client and the server in this example are able to handle WAP, and are hereafter also referred as WAP client and WAP server, respectively. Thus, the WAP client described with reference to Fig.6 can be e.g. a "WAP phone". The phone in this example may be provided with a smart card, preferably with a SIM card (Subscriber Identity Module).
- **Step1,** When a client subscription is made, a push command, comprising the setting(s) for the client, is set to be pending on the WAP server. The initial settings may e.g. comprise the address of the WAP server the client should use.
   The setting can be inputted automatically, which can be based on information about e.g. phone (client) type and capabilities.
   When the phone is turned on for the first time and the SIM card is activated, the push command can be sent from the WAP server to the phone. The push command is now sent through a WAP stack in the phone, and inputted to a user agent (e.g. a browser). The user agent may at this point either use the information to automatically input the initial settings, i.e. set up the phone or prompt the user a question if he/she wants to initiate the phones WAP capabilities (e.g. use the browser), if the answer is yes the phone is set up. The user agent can e.g. be provided in the controller, as described in Fig. 2.
   At this point, receipt of the push command is not confirmed, and therefore the WAP server may not yet know if the push is received by the phone.
- **Step 2,** If the WAP server has sent the push command and the phone does not respond with a Connect_request (see step 3) the push command is sent once more to the phone, "Repeated push". The server may send the initialising means repeatedly, over a fixed number of times, e.g. for 10 times or more, or until the client has sent a response back to the server confirming receipt of the initialising means. Naturally, the sending can be less than 10 times, because this is only a parameter which can be set in the WAP server. Instead of using a push command, it may also be possible to send the initialising means by using a short message (SMS).
   The advantage of having a fixed interval is that if a new subscriber activates the SIM card for the first time, in a phone which does not support WAP, the server does not have to perform an endless loop. Thus, this will save some unnecessary commands to be sent over the air.
- **Step 3,** When the phone has received the setting and the set up (the input) of the phone has come to an end, the phones WAP user agent may send a request to a session layer for establishing a session. How this session is set up is defined in "WAP Wireless Session Protocol Specification Draft Version 30-Apr-1998". Figure 3, page 20 (see also http://www.wapforum.org/docs/technical.htm/wsp-30-apr-98.pdf ). In other words, the client sends a Connect_request to the WAP server with an address defined in the push command, which is recognised by the WAP server.
   Thus, the WAP server receives a confirmation from the client, confirming that the push command is received and accepted by the phone. This also means that the "Repeated push" in Step 2 can be disabled.
- **Step 4,** When the WAP server receives the Connect_request it responds with a Connect_reply as described in "WAP Wireless Session Protocol Specification Draft Version 30-Apr-1998", Figure 3, page 20 (see also http://www.wapforum.org/docs/technical.htm/wsp-30-apr-98.pdf ).
   Finally, a session is now established, which means that the WAP phone and the WAP server may now communicate over the session.
   When the session is established the phone may have the possibility to "fuse" or disable to receive another push command comprising settings. By doing so, it will increase the security for the user, i.e. it will reduce the risk of having a security hole, where e.g. hackers can send new phone settings to the WAP phone (e.g. with request to connect to non friendly WAP servers).
- **Step 5,** The future communication between the phone and the WAP server can now take place over the established session, i.e. it will be possible to exchange data over a WAP session.
   A major advantage of step 5 is that the user does not have to wait for the time it takes for a session to be established when he/she uses the user agent (browser) for the first time.

Fig. 8 illustrates an example, in accordance with the present invention, of a user interface arranged in a client. The client is arranged to access a server computer, via a wireless telecommunication network, as shown in Fig. 3. The user interface can be provided with display means 100, e.g. an LCD display, which is disclosed in more detail with reference to Figs. 1 and 2. One of the functions in the user interface is to receive an input of initialising means, giving the client access to the server computer.

When the client sends a request, comprising identification means (not shown) identifying the client, to the network, the network performs an identification of the client, as shown in Fig. 5. If the network recognises the identification means, a connection is established between the client and the network. When the client is connected to the network, the computer server controls whether the client is authorised to the server or not. If the server recognises the identification means, received in the request to the network, the server sends initialising means to the client. These initialising means comprises information about the settings, which should be inputted in the client in order to access the server computer. When the client receives the initialising means, the client can be informed about the receipt by indicating the reception on the display means 100, e.g. by showing a message 110 saying "Browser settings received". This message 110 may generate an option for the client, to "exit" 111 or "show" 112 the received settings. If the client chooses to exit this message 110, it may be possible for the client to view the settings at a later occasion.

If the client has chosen to "show" 112 the received browser settings, a new message 120a,b can be generated. The message 120a informs the client what the received settings are, e.g. "Server number" and "Service number". Also, there might be other information comprised in this message 120b, indicating e.g. at what location the client will start a session ("Homepage URL: http//www.nokia.com"), i.e. the address of a particular homepage which will be requested by the client when accessing the server. At this point, the client may choose to "Save" 121 or to "Exit" 122, this message 120. If the client choose to "Exit" 122, no settings will be inputted, i.e. saved. If the client choose to "Save" 121 these settings, the settings will be saved in the client, which can be indicated by a message 130 saying e.g. "Saved".

The example given in Fig. 8 shows how it can be possible for the user/client to affect the settings. Naturally, it is possible for the user interface to automatically accept the settings, without requesting an accept from the user, and input the settings, before the first time the client is going to establish a connection to the server computer. As mentioned with reference to Fig. 2, the automatic acceptance is handled by the controller 18.

The invention is not limited to the above described and in the drawings shown examples of an embodiment but can be varied within the scope of the appended claims. For example, it is possible for a client to have access to the network, even if the client is not authorised to a server computer connected to the network.

### Acronyms.

- APDU: Application Protocol Data Unit
- API: Application Programming Interface
- CA: Certification Authority
- CBC: Cipher Block Chaining
- DF: Dedicated File
- DH: Diffie-Heltman
- EC: Elliptic Curve
- ECC: Elliptic Curve Cryptography
- ECDH: Elliptic Curve Diffie-Hellman
- ECDSA: Elliptic Curve Digital Signature Algorithm
- EF: Elementary File
- GSM: Global System for Mobile Communication
- IV: Initialization Vector
- MAC: Message Authentication Code
- ME: Management Entity
- OSI: Open System Interconnection
- PDU: Protocol Data Unit
- PRF: Pseudo-Random Function
- SAP: Service Access Point
- SDU: Service Data Unit
- SHA-1: Secure Hash Algorithm
- SIM: Subscriber Identity Module
- SMS: Short Message Service
- SSL: Secure Sockets Layer
- TLS: Transport Layer Security
- WAP: Wireless Application Protocol
- WML: Wireless Markup Language
- WMLScript: Wireless Markup LanguageScript
- WDP: Wireless Datagram Protocol
- WSP: Wireless Session Protocol
- WTLS: Wireless Transport Layer Security
- WTP: Wireless Transaction Protocol

The list above includes the acronyms used in the present text. Detailed discussion and explanation of the acronyms may be found in the technical specifications defining the Wireless Application Protocol on the Intemet homepage for WAPFORUM, http://www.wapforum.org/.

## Claims

1. A method of inputting a setting or settings to a client (1, 1') for accessing a server computer (20), said server computer (20) is connected to a telecommunication network (50, 50', 51, 52), said server (20) comprising initialising means giving the client (1, 1') access to said server (20), said initialising means comprising information about the setting or settings to be inputted to the client (1, 1'), wherein the method comprises the following steps:
sending a request (60, 510) from said client to said network (50, 50', 51, 52) to establish a connection between the client (1, 1') and the network (50,50', 51, 52), said request (60, 510) comprises identification information identifying said client (1, 1'), and
said network (50, 50', 51, 52), upon recognition of said identification information sends a response (90) to said request and establishes a connection (540) between the client (1, 1') and the network (50, 50', 51, 52),
**characterised in that**
said server (20), upon identification of the client sends (560) the information about the setting or settings, to the client (1, 1'), before the first time the client establishes a connection to the server (20), in order to give an input of the setting or settings to the client (1, 1') which gives access to the server (20).

2. Method according to claim 1, **characterised in that** the client (1, 1') sends a response (570) to the server (20) upon receipt of said information about the setting or settings, to confirm the receipt of the information about the setting or settings.

3. Method according to claim 1 or 2, **characterised in that** the server (20) sends the information about the setting or settings repeatedly, over a fixed number of times, or until the client (1, 1') has sent a response back to the server (20) confirming the receipt of the information about the setting or settings.

4. Method according to claim 1, 2, or 3, **characterised in that** the server (20) automatically detects said identification information sent to the network (50, 50', 51, 52), when the client (1, 1') has sent the request (60) to the network, and sends the information about the setting or settings to the client upon detection.

5. Method according to claim 1, 2 or 3, **characterised in that** the client (1, 1') sends a downloading request to the server (20) for downloading the information about the setting or settings, and upon receipt of said downloading request, the server (20) sends the information about the setting or settings back to the client (1, 1') as a response to said downloading request.

6. Method according to claim 1, 2, 3, 4 or 5, **characterised in that** the information about the setting or settings is sent as a short message (SMS).

7. Method according to any one of the preceding claims, **characterised in that** said client (1, 1') and said server (20) is using a Wireless Application Protocol (WAP), and the information about the setting or settings is sent to the client (1, 1') by using a push command.

8. Method according to any one of the preceding claims, **characterised in that** the client (1, 1') is provided with controller means (18), which automatically asks the client (1, 1') for an input of the information about the setting or settings, before the first time the client (1, 1') establishes a connection to the server (20).

9. System (40) for inputting a setting or settings, said system (40) comprises:
a client (1, 1'), arranged to receive an input of a setting or settings,
a server computer (20), having initialising means giving the client (1, 1') access to said server (20), said initialising means comprising information about the setting or settings to be inputted in the client (1, 1'), and
a cellular telecommunication network (50, 50', 51, 52) connected to said server (20), and arranged to establish a wireless connection between the client (1, 1') and the telecommunication network (50, 50', 51, 52) upon receiving a request (60, 510) from said client (1, 1'), said network (50, 50', 51, 52) comprising memory means which is arranged to identify the identification means from the client
**characterised in that** said server (20) is arranged to send the information about the setting or settings, to the client (1, 1'), upon recognition of said identification means received in the request (60, 510) to the network (50, 50', 51, 52), before the first time the client (1, 1') is establishing a connection to the server (20), in order to give an input of the setting or settings to the client (1, 1') which gives access to the server (20).

10. A system (40) according to claim 9, **characterised in that** the server (20) and the client (1, 1') is provided with a Wireless Application Protocol (WAP).

11. A system (40) according to claim 10, **characterised in that** the server (20) is further arranged to send the information about the setting or settings to the client (1,1') by using a push command, and/or a short message (SMS).

12. A server computer (20) provided with initialising means giving a client (1,1') access to said server (20), said initialising means comprising information about a setting or settings to be inputted to the client (1, 1') said server (20) is arranged for connection to a cellular telecommunication network (50, 50', 51, 52) said network (50, 50', 51, 52) is arranged to establish a connection between the client (1, 1') and the telecommunication network (50, 50', 51, 52) upon receiving a request (60) from said client (1, 1'), said request (60) comprising identification means identifying said client (1, 1'), said network (50, 50', 51, 52) comprising memory means which is arranged to identifying the identification information in the request (60),
**characterised in that** said server (20) is further arranged to send the information about the setting or settings to the client (1, 1'), upon recognition of said identification information received in the request (60) in the network (50, 50', 51, 52), before the first time the client (1, 1') establishes a connection to the server (20), in order to give the client (1, 1') an access to the server (20).

13. A server (20) according to claim 12, **characterised in that** server (20) and the client (1, 1') is provided with a Wireless Application Protocol (WAP).

14. A server (20) according to claim 13, **characterised in that** the server (20) is further arranged to send the information about the setting or settings to the client (1, 1') by using a push command.

15. A client (1, 1') arranged to access a server computer (20), via a wireless telecommunication network (50, 50', 51, 52), said client (1, 1') comprising controller means (18) arranged to receive an input of initialising means giving the client (1, 1') access to said server (20) said initialising means comprising information about the setting or settings to be inputted to the client (1, 1'), **characterised in that** the controller means (18) is further arranged to automatically ask for the input of the information about the setting or settings from the server computer (20), before the first time client (1, 1') attempts to establish a connection to said server (20).

16. A client (1, 1') according to claim 15, **characterised in that** the client (1, 1') and the server (20) is provided with a Wireless Application Protocol (WAP).

17. A client (1, 1') according to claim 16, **characterised in that** the client (1, 1') is further arranged to receive the information about the setting or settings from the server (20) through a push command.

18. Wireless communication terminal being a client (1, 1') according to claim 15.

19. A wireless communication terminal according to claim 18, **characterised in that** said terminal is a cellular phone (1).

## Patentansprüche

1. Verfahren zum Eingeben einer oder mehrerer Einstellungen in einen Client (1, 1'), um auf einen Server-Computer (20) zuzugreifen, wobei der Server-Computer (20) mit einem Telekommunikationsnetz (50, 50', 51, 52) verbunden ist, wobei der Server (20) Initialisierungsmittel umfasst, die dem Client (1, 1') den Zugriff auf den Server (20) erteilen, wobei die Initialisierungsmittel Informationen über die eine oder die mehreren Einstellungen, die in den Client (1, 1') einzugeben sind, enthalten, wobei das Verfahren die folgenden Schritte umfasst:
Senden einer Anforderung (60, 510) von dem Client an das Netz (50, 50', 51, 52), um eine Verbindung zwischen dem Client (1, 1') und dem Netz (50, 50', 51, 52) aufzubauen, wobei die Anforderung (60, 510) Identifizierungsinformationen enthält, die den Client (1, 1') identifizieren, und
mittels des Netzes (50, 50', 51, 52) Senden einer Antwort (90) auf die Anforderung bei Erkennung der Identifizierungsinformationen und Aufbauen einer Verbindung (540) zwischen dem Client (1, 1') und dem Netz (50, 50', 51, 52),
**dadurch gekennzeichnet, dass**
der Server (20) bei Identifizierung des Client die Informationen über die eine der die mehreren Einstellungen an den Client (1, 1') sendet (560), bevor der Client erstmals eine Verbindung mit dem Server (20) aufbaut, um eine Eingabe der einen oder der mehreren Einstellungen in den Client (1, 1') zu schaffen, die einen Zugriff auf den Server (20) erteilen.

2. Verfahren nach Anspruch 1, **dadurch gekennzeichnet, dass** der Client (1, 1') eine Antwort (570) an den Server (20) sendet, wenn er die Informationen über die eine oder die mehreren Einstellungen empfängt, um den Empfang der Informationen über die eine oder die mehreren Einstellungen zu bestätigen.

3. Verfahren nach Anspruch 1 oder 2, **dadurch gekennzeichnet, dass** der Server (20) die Informationen bezüglich der einen oder der mehreren Einstellungen in einer festen Anzahl oder bis zu dem Zeitpunkt, zu dem der Client (1, 1') eine Antwort zum Server (20) zurückgeschickt hat, die den Empfang der Informationen über die eine oder die mehreren Einstellungen bestätigt, wiederholt sendet.

4. Verfahren nach Anspruch 1, 2 oder 3, **dadurch gekennzeichnet, dass** der Server (20) die Identifizierungsinformationen, die zu dem Netz (50, 50', 51, 52) gesendet wurden, automatisch erfasst, wenn der Client (1, 1') die Anforderung (60) an das Netz gesendet hat, und die Informationen bezüglich der einen oder der mehreren Einstellungen an den Client sendet, wenn die Erfassung erfolgt.

5. Verfahren nach Anspruch 1, 2 oder 3, **dadurch gekennzeichnet, dass** der Client (1, 1') eine Herunterladeanforderung an den Server (20) sendet, um die Informationen bezüglich der einen oder der mehreren Einstellungen herunterzuladen, und der Server (20) bei Empfang der Herunterladeanforderung die Informationen bezüglich der einen oder der mehreren Einstellungen in Reaktion auf die Herunterladeanforderung zurück zum Client (1, 1') sendet.

6. Verfahren nach Anspruch 1, 2, 3, 4 oder 5, **dadurch gekennzeichnet, dass** die Informationen bezüglich der einen oder der mehreren Einstellungen als eine Kurznachricht (SMS) gesendet werden.

7. Verfahren nach einem der vorhergehenden Ansprüche, **dadurch gekennzeichnet, dass** der Client (1, 1') und der Server (20) ein Protokoll für drahtlose Anwendungen (Wireless Application Protocol (WAP)) verwenden und die Informationen über die eine oder die mehreren Einstellungen zu dem Client (1, 1') unter Verwendung eines Schiebebefehls (Push Command) gesendet werden.

8. Verfahren nach einem der vorhergehenden Ansprüche, **dadurch gekennzeichnet, dass** der Client (1, 1') mit Controller-Mitteln (18) versehen ist, die den Client (1, 1 ') automatisch zu einer Eingabe der Informationen bezüglich der einen oder der mehreren Einstellungen auffordern, bevor der Client (1, 1') erstmals eine Verbindung mit dem Server (20) aufbaut.

9. System (40) zum Eingeben einer oder mehrerer Einstellungen, wobei das System (40) umfasst:
einen Client (1, 1'), der so beschaffen ist, dass er eine Eingabe einer oder mehrerer Einstellungen empfängt,
einen Server-Computer (20), der Initialisierungsmittel besitzt, die dem Client (1, 1') Zugriff auf den Server (20) erteilen, wobei die Initialisierungsmittel Informationen bezüglich der einen oder der mehreren Einstellungen, die in den Client (1, 1') einzugeben sind, enthalten, und
ein Zellentelekommunikationsnetz (50, 50', 51, 52), das mit dem Server (20) verbunden und so beschaffen ist, dass es bei Empfang einer Anforderung (60, 510) von dem Client (1, 1') zwischen dem Client (1, 1') und dem Telekommunikationsnetz (50, 50', 51, 52) eine drahtlose Verbindung aufbaut, wobei das Netz (50, 50', 51, 52) Speichermittel umfasst, die so beschaffen sind, dass sie die Identifizierungsmittel von dem Client identifizieren,
**dadurch gekennzeichnet, dass** der Server (20) so beschaffen ist, dass er die Informationen bezüglich der einen oder der mehreren Einstellungen zu dem Client (1, 1') sendet, wenn er die Identifizierungsmittel, die in der Anforderung (60, 510) an das Netz (50, 50', 51, 52) empfangen werden, erkennt, bevor der Client (1, 1') erstmals eine Verbindung mit dem Server (20) aufbaut, um eine Eingabe der einen oder der mehreren Einstellungen in dem Client (1, 1') vorzunehmen, die Zugriff auf den Server (20) erteilt.

10. System (40) nach Anspruch 9, **dadurch gekennzeichnet, dass** der Server (20) und der Client (1, 1') mit einem Protokoll für drahtlose Anwendungen (Wireless Application Protocol (WAP)) versehen ist.

11. System (40) nach Anspruch 10, **dadurch gekennzeichnet, dass** der Server (20) ferner so beschaffen ist, dass er die Informationen über die eine oder die mehreren Einstellungen zu dem Client (1, 1') unter Verwendung eines Schiebebefehls (Push Command) und/oder einer Kurznachricht (SMS) sendet.

12. Server-Computer (20), der mit Initialisierungsmitteln versehen ist, die einen Client (1, 1') Zugriff auf den Server (20) erteilen, wobei die Initialisierungsmittel Informationen bezüglich einer oder mehrerer Einstellungen enthalten, die in den Client (1, 1') einzugeben sind, wobei der Server (20) so beschaffen ist, dass er eine Verbindung mit einem Zellentelekommunikationsnetz (50, 50', 51, 52) herstellt, wobei das Netz (50, 50', 51, 52) so beschaffen ist, dass es seine Verbindung zwischen dem Client (1, 1') und dem Telekommunikationsnetz (50, 50', 51, 52) aufbaut, wenn es eine Anforderung (60) von dem Client (1, 1') empfängt, wobei die Anforderung (60) Identifizierungsmittel enthält, die den Client (1, 1') identifizieren, wobei das Netz (50, 50', 51, 52) Speichermittel umfasst, die so beschaffen sind, dass sie die Identifizierungsinformationen in der Anforderung (60) identifizieren,
**dadurch gekennzeichnet, dass** der Server (20) ferner so beschaffen ist, dass er die Informationen bezüglich der einen oder der mehreren Einstellungen zu dem Client (1, 1') sendet, wenn er die Identifizierungsinformationen, die in der Anforderung (60) empfangen werden, im Netz (50, 50', 51, 52) erkennt, bevor der Client (1, 1') erstmals eine Verbindung mit dem Server (20) aufbaut, um dem Client (1, 1') einen Zugriff auf den Server (20) zu erteilen.

13. Server (20) nach Anspruch 12, **dadurch gekennzeichnet, dass** der Server (20) und der Client (1, 1') mit einem Protokoll für drahtlose Anwendungen (Wireless Application Protocol (WAP)) versehen sind.

14. Server (20) nach Anspruch 13, **dadurch gekennzeichnet, dass** der Server (20) ferner so beschaffen ist, dass er die Informationen bezüglich der einen oder der mehreren Einstellungen zu dem Client (1, 1') unter Verwendung eines Schiebebefehls (Push Command) sendet.

15. Client (1, 1'), der so beschaffen ist, dass er auf einen Server-Computer (20) über ein drahtloses Telekommunikationsnetz (50, 50', 51, 52) zugreift, wobei der Client (1, 1') Controller-Mittel (18) umfasst, die so beschaffen sind, dass sie eine Eingabe von Initialisierungsmitteln empfangen, die dem Client (1, 1') Zugriff auf den Server (20) erteilen, wobei die Initialisierungsmittel Informationen bezüglich der einen oder der mehreren Einstellungen, die in den Client (1, 1') einzugeben sind, enthält, **dadurch gekennzeichnet, dass** die Controller-Mittel (18) ferner so beschaffen sind, dass sie automatisch zu der Eingabe der Informationen bezüglich der einen oder der mehreren Einstellungen von dem Server-Computer (20) auffordern, bevor der Client (1, 1') erstmals versucht, eine Verbindung mit dem Server (20) aufzubauen.

16. Client (1, 1') nach Anspruch 15, **dadurch gekennzeichnet, dass** der Client (1, 1') und der Server (20) mit einem Protokoll für drahtlose Anwendungen (Wireless Application Protocol (WAP)) versehen sind.

17. Client (1, 1') nach Anspruch 16, **dadurch gekennzeichnet, dass** der Client (1, 1') ferner so beschaffen ist, dass er die Informationen bezüglich der einen oder der mehreren Einstellungen von dem Server (20) durch einen Schiebebefehl (Push Command) empfängt.

18. Endgerät für drahtlose Kommunikation, das ein Client (1, 1') nach Anspruch 15 ist.

19. Endgerät für drahtlose Kommunikation nach Anspruch 18, **dadurch gekennzeichnet, dass** das Endgerät ein Zellentelephon (1) ist.

## Revendications

1. Procédé consistant à appliquer en entrée à un client (1, 1') un réglage ou des réglages afin d'accéder à un ordinateur serveur (20), ledit ordinateur serveur (20) est connecté à un réseau de télécommunications (50, 50', 51, 52), ledit serveur (20) comprenant un moyen d'initialisation qui donne au client (1, 1') un accès audit serveur (20), ledit moyen d'initialisation comprenant des informations concernant le réglage ou les réglages devant être appliqués en entrée au client (1, 1'), où le procédé comprend les étapes suivantes :
l'envoi d'une demande (60, 510) depuis ledit client vers ledit réseau (50, 50', 51, 52) afin d'établir une connexion entre le client (1, 1') et le réseau (50, 50', 51, 52), ladite demande (60, 510) comprend des informations d'identification identifiant ledit client (1, 1'), et
ledit réseau (50, 50', 51, 52), à la reconnaissance desdites informations d'identification, envoie une réponse (90) à ladite demande et établit une connexion (540) entre le client (1, 1') et le réseau (50, 50', 51, 52),
**caractérisé en ce que**
ledit serveur (20), à l'identification du client, envoie (560) les informations concernant le réglage ou les réglages, au client (1, 1'), avant que le client n'établisse une connexion au serveur (20) pour la première fois, de façon à donner une entrée du réglage ou des réglages au client (1, 1'), ce qui donne accès au serveur (20).

2. Procédé selon la revendication 1, **caractérisé en ce que** le client (1, 1') envoie une réponse (570) au serveur (20) à la réception desdites informations concernant le réglage ou les réglages, afin de confirmer la réception des informations concernant le réglage ou les réglages.

3. Procédé selon la revendication 1 ou 2, **caractérisé en ce que** le serveur (20) envoie les informations concernant le réglage ou les réglages de façon répétée, un nombre fixe de fois, ou jusqu'à ce que le client (1, 1') ait renvoyé une réponse confirmant au serveur (20) la réception des informations concernant le réglage ou les réglages.

4. Procédé selon la revendication 1, 2 ou 3, **caractérisé en ce que** le serveur (20) détecte automatiquement lesdites informations d'identification envoyées au réseau (50, 50', 51, 52), lorsque le client (1, 1') a envoyé la demande (60) au réseau, et envoie les informations concernant le réglage ou les réglages au client, à la détection.

5. Procédé selon la revendication 1, 2 ou 3, **caractérisé en ce que** le client (1, 1') envoie une demande de téléchargement au serveur (20) afin de télécharger les informations concernant le réglage ou les réglages, et à la réception de ladite demande de téléchargement, le serveur (20) renvoie les informations concernant le réglage ou les réglages au client (1, 1') en tant que réponse à ladite demande de téléchargement.

6. Procédé selon la revendication 1, 2, 3, 4 ou 5, **caractérisé en ce que** les informations concernant le réglage ou les réglages sont envoyées sous forme d'un message court (SMS).

7. Procédé selon l'une quelconque des revendications précédentes, **caractérisé en ce que** ledit client (1, 1') et ledit serveur (20) utilisent un protocole d'application sans fil (WAP), et les informations concernant le réglage ou les réglages sont envoyées au client (1, 1') en utilisant une instruction d'empilement.

8. Procédé selon l'une quelconque des revendications précédentes, **caractérisé en ce que** le client (1, 1') dispose d'un moyen de contrôleur (18), qui demande automatiquement au client (1, 1') une entrée des informations concernant le réglage ou les réglages, avant que le client (1, 1') n'établisse une connexion au serveur (20) pour la première fois.

9. Système (40) destiné à appliquer en entrée un réglage ou des réglages, ledit système (40) comprend :
un client (1, 1') agencé pour recevoir une entrée d'un réglage ou de réglages,
un ordinateur serveur (20), ayant un moyen d'initialisation qui donne au client (1, 1') un accès audit serveur (20), ledit moyen d'initialisation comprenant des informations concernant le réglage ou les réglages devant être appliqués en entrée au client (1, 1'), et
un réseau de télécommunications cellulaire (50, 50', 51, 52) connecté audit serveur (20), et agencé pour établir une connexion sans fil entre le client (1, 1') et le réseau de télécommunications (50, 50', 51, 52) à la réception d'une demande (60, 510) provenant dudit client (1, 1'), ledit réseau (50, 50', 51, 52) comprenant un moyen de mémoire qui est agencé pour identifier le moyen d'identification provenant du client
**caractérisé en ce que** ledit serveur (20) est agencé pour envoyer les informations concernant le réglage ou les réglages au client (1, 1'), à la reconnaissance dudit moyen d'identification reçu dans la demande (60, 510) au réseau (50, 50', 51, 52), avant que le client (1, 1') n'établisse une connexion au serveur (20) pour la première fois, de façon à donner une entrée du réglage ou des réglages au client (1, 1') ce qui donne accès au serveur (20).

10. Système (40) selon la revendication 9, **caractérisé en ce que** le serveur (20) et le client (1, 1') disposent d'un protocole d'application sans fil (WAP).

11. Système (40) selon la revendication 10, **caractérisé en ce que** le serveur (20) est en outre agencé pour envoyer les informations concernant le réglage ou les réglages au client (1, 1') en utilisant une instruction d'empilement et/ou un message court (SMS).

12. Ordinateur serveur (20) disposant d'un moyen d'initialisation qui donne au client (1, 1') un accès audit serveur (20), ledit moyen d'initialisation comprenant des informations concernant un réglage ou des réglages devant être appliqués en entrée au client (1, 1'), ledit serveur (20) est agencé pour une connexion à un réseau de télécommunications cellulaire (50, 50', 51, 52), ledit réseau (50, 50', 51, 52) est agencé pour établir une connexion entre le client (1, 1') et le réseau de télécommunications (50, 50', 51, 52) à la réception d'une demande (60) provenant dudit client (1, 1'), ladite demande (60) comprenant un moyen d'identification identifiant ledit client (1, 1'), ledit réseau (50, 50', 51, 52) comprenant un moyen de mémoire qui est agencé pour identifier les informations d'identification dans la demande (60),
**caractérisé en ce que** ledit serveur (20) est en outre agencé pour envoyer les informations concernant le réglage ou les réglages au client (1, 1'), à la reconnaissance desdites informations d'identification reçues dans la demande (60) dans le réseau (50, 50', 51, 52), avant que le client (1, 1') n'établisse une connexion au serveur (20) pour la première fois, de façon à donner au client (1, 1') un accès au serveur (20).

13. Serveur (20) selon la revendication 12, **caractérisé en ce que** le serveur (20) et le client (1, 1') disposent d'un protocole d'application sans fil (WAP).

14. Serveur (20) selon la revendication 13, **caractérisé en ce que** le serveur (20) est en outre agencé pour envoyer les informations concernant le réglage ou les réglages au client (1, 1') en utilisant une instruction d'empilement.

15. Client (1, 1') agencé pour accéder à un ordinateur serveur (20), par l'intermédiaire d'un réseau de télécommunications sans fil (50, 50', 51, 52), ledit client (1, 1') comprenant un moyen de contrôleur (18) agencé pour recevoir une entrée du moyen d'initialisation qui donne au client (1, 1') un accès audit serveur (20), ledit moyen d'initialisation comprenant des informations concernant le réglage ou les réglages devant être appliqués en entrée au client (1, 1'), **caractérisé en ce que** le moyen de contrôleur (18) est en outre agencé pour demander automatiquement l'entrée des informations concernant le réglage ou les réglages provenant de l'ordinateur serveur (20), avant que le client (1, 1') ne tente d'établir une connexion audit serveur (20) pour la première fois.

16. Client (1, 1') selon la revendication 15, **caractérisé en ce que** le client (1, 1') et le serveur (20) disposent d'un protocole d'application sans fil (WAP).

17. Client (1, 1') selon la revendication 16, **caractérisé en ce que** le client (1, 1') est en outre agencé pour recevoir les informations concernant le réglage ou les réglages provenant du serveur (20) par l'intermédiaire d'une instruction d'empilement.

18. Terminal de communication sans fil qui est un client (1, 1') selon la revendication 15.

19. Terminal de communication sans fil selon la revendication 18, **caractérisé en ce que** ledit terminal est un téléphone cellulaire (1).
